# EUROPEAN PATENT APPLICATION

(11) **EP 1 256 894 A2**
(43) Date of publication of application: **13.11.2002**
(21) Application number: 02252989.5
(22) Date of filing: 26.04.2002
(51) Int. Cl.: G06F 17/60

(54) **Method and system for providing remote quality assurance audits**

(30) Priority: 27.04.2001 US 842785
(71) Applicant: Global Nuclear Fuel-Americas, LLC, Wilmongton, North Carolina 28401 (US)
(72) Inventor: Bryan, Helen Elizabeth, Wilmington, North Carolina 28403 (US); Colby, Mark Joseph, Wilmington, North Carolina 28405 (US); Reda, Ralph Joseph, Wilmington, North Carolina 28403 (US); Waltermire, Daniel Brian, Painesville, Ohio 44077 (US); Williams, William Kerry, Wilmington, North Carolina 28405 (US)
(74) Representative: Pedder, James Cuthbert

(57) **Abstract**

A system for auditing complex systems (14), such as nuclear power plants, is disclosed. The system stores all documents necessary for an audit. These documents are available for remote review by auditors via an Internet website. The website (16) has one or more graphical maps (18) of the system, its components and/or sub-systems that allows the auditor to select and access documents in the database(s).

## Description

The invention relates to the fields of quality assurance, and regulatory review of systems and products. Specifically, the invention relates to the tracking and organization of information and documents audited by regulatory agencies of nuclear reactor systems, and other groups and organizations.

Operators of large and complex systems, such as nuclear reactor power plants, large medical equipment systems, pharmaceutical manufacturers, and aircraft operators (e.g., airlines) are often required by governmental regulatory authorities to audit the engineering, design and manufacturing aspects of those systems. These audits are performed to confirm that the systems are being operated safely, that the system components have been manufactured and maintained to certain quality assurance standards, that the proper components have been installed in the system, and other aspects of the system. These audits review the documentation related to the system and their components. The audits review the documentation to confirm that the system and their components have complied with various safety related design and maintenance procedures and have fulfilled safety related testing.

The audits typically require a review of design records, design procedures, calculations, related to the operation of the systems, drawings of the systems, systems specifications, manufacturing procedures used for the system, certifications of raw material and other components used in the system, and other pertinent quality assurance data related to the system. The documentation reviewed in an audit are organized in various files maintained by different groups, and may or may not be maintained in computer files. Even if the documentation is stored in a computer, the documentation will likely be spread across several different and incompatible databases. Because the documentation is distributed in various files and different databases, it is difficult for an auditor to readily access all of the databases to obtain the information needed to conduct a regulatory audit. An audit is currently conducted by an in-person auditing team that travels to the engineering or manufacturing location to review computer and paper records to obtain the documentation and other information needed to conduct the audit. This auditing process is time consuming and expensive, as it often requires audit personnel to travel to a specific engineering and manufacturing facility to review documentation. An audit team may be required to travel to the site of the system, and to vendor sites to review the manufacturing records for components of the system.

The auditing procedure has not previously been automated. In the past, no document organization and tracking system has been developed for documentation used for auditing complex systems, such as a nuclear power plant. There are several technical and other reasons as to why the auditing procedure has not been automated. These reasons include the diversity and incompatibility of the documentation which is required to conduct an audit. A second reason is that the audit must review current information that has been certified by the operator of the facility (system) being audited or the vendor supplying components for the system. A third reason is that auditors are typically government employees or other independent personnel who may have only limited access to the confidential business information which must be reviewed in conducting the audit. To provide an auditor unlimited review of all documents or information in a computer network would violate security concerns of the manufacturer or operator of the system being audited. A fourth reason for why auditing procedures have not been automated using computer networks is the large volume of information which may be subject to an audit makes it difficult to reliably predict exactly which documentation will be reviewed by the auditor and which components of a system will be selected for audit. In view of these reasons, the hurdles for creating a computer system that would facilitate the auditing process are substantial and have heretofore not been overcome.

The present invention relates to a computer network system that provides access to electronic databases that warehouse the various information and documentation needed for an audit review. In addition, the system has sophisticated data search software tools that enable an auditor to view graphical representations of the system being audited and identify specific operational features or components of the system to be audited. By identifying those specific features of the system, the auditor can query the system to obtain current and verified information regarding that selected feature. The information obtained from the query may be used by the auditors to conduct their audit of the system. The auditors may query the system via a secure internet site maintained by the manufacturer or operator of the system being audited. The auditors may have appropriate passwords and user identification codes that allow them to securely access the website and obtain the documentation necessary to conduct the audit.

In one embodiment, the invention includes a computer network system comprising a secure network having linkages to several electronic databases including data regarding mechanical design, engineering calculations and tests, and quality assurance data. These electronic databases are maintained so as to have current information, and some may also store historical information. In addition, the databases have security features to restrict data loaded into the database to be only that data that has been verified by the system operators. In this way, the data within the electronic database is accessible via the system represents information that is current and verified. The information within the database may be relied on by auditors during the conduct of their auditing. Moreover, the databases are established so as to have complete information that is sufficient for the auditors to conduct their auditing reviews.

The network computer system for auditing reviews also includes access to a website host computer through an Internet website. Through the website, an auditor may securely query the databases and obtain information for conducting an audit review. In particular, the website may include a security web page through which the auditor logs on and enters pass code information to obtain access to the website. Once logged on, the auditor is presented with a listing of certain information that is sufficient to conduct the audit review. This listing is tailored to the auditing process and does not provide information which is unnecessary to the review and which may be confidential to the manufacturer or system operator. For example, the auditor may access a website page that requests the identification of the system, e.g., nuclear power plant and facility, to be reviewed.

Once the auditor selects a particular system to be reviewed, the auditor is presented with a graphical presentation of the selected system. This graphical presentation presents a map or group of interactive maps of the entire system. Using this map, the auditor selects particular system functions, features or components to be audited. The graphical map of the system is extremely useful to the auditor in identifying specific features and functions to be reviewed. The map allows the auditor to "point and click" on a selected system component or feature to be audited. The auditor generally does not desire to conduct a comprehensive review of all operations and components of a system. Rather, the auditor may wish to choose selective functions or components of the system for auditing. The auditor requires the ability to arbitrarily select any system function or component for an audit. Thus, the graphical map of the system presents the entire system to the auditor for selection.

The graphical system map also allows the auditor to make a random or other auditor controlled selection of functions of components for the audit. Moreover, the map presents the system manufacturer or operator to reselect which system functions or components that the auditor would review. Thus, the graphical map of the system provides a means by which an auditor can conduct a limited and random review of certain selected features of the system that is sufficient to statistically verify that the entire system is being properly operated.

Once the auditor selects the component or function to be audited by interacting with the graphical map, the computer system presents a list of documentation for that selected function or feature. For example, upon selecting a particular sub-component of the system for review, the computer network system may present an internet web page to the auditor that lists the parts and certification information related to the selected subsystem. The listing of parts and certification information may be then reviewed by the auditor by selecting parts and/or certification data that the auditor wishes to specifically review during the course of the audit. For each part or certification data selected for review by the auditor, the auditor may call up from the database the detailed data, such as drawings, tests results, manufacturing reports, design reports and other information, that relate to that specific part or function. By reviewing the detailed data, the auditor may confirm that the selected part has been manufactured and operated in accordance with the appropriate safety standards.

The invention will now be described in greater detail, by way of example, with reference to the drawings, in which:-
FIGURE 1 is a functional diagram showing a sequence of interactive steps with a secure Internet website for remotely conducting a quality review audit;
FIGURES 2 through 7 are exemplary website pages relating to the steps shown in FIGURE 1, and
FIGURE 8 is an exemplary computer network for supporting the secure website shown in FIGURE 1.

A novel system has been developed for remotely accessing, displaying and reviewing documents over the Internet that are needed for a regulatory audit of a nuclear power plant. This system allows users, such as auditors, to remotely view critical design calculations, procedures, manufacturing records and product certifications via the Internet using a remote, web based graphical environment. Auditors using this system may efficiently and effectively review design and manufacturing records. Accordingly, the system enables auditors to conduct remotely a thorough and complete audit of quality assurance records of a manufacturer or operator of a safety related facility, such as a nuclear fuel power generation plant.

A system tailored for auditing records at a nuclear power generation facility is an exemplary embodiment of the present invention that is disclosed here.

The description of this exemplary embodiment provides sufficient information that persons of ordinary skill in the art can fully comprehend and understand the invention and adapt the system to their own purposes.

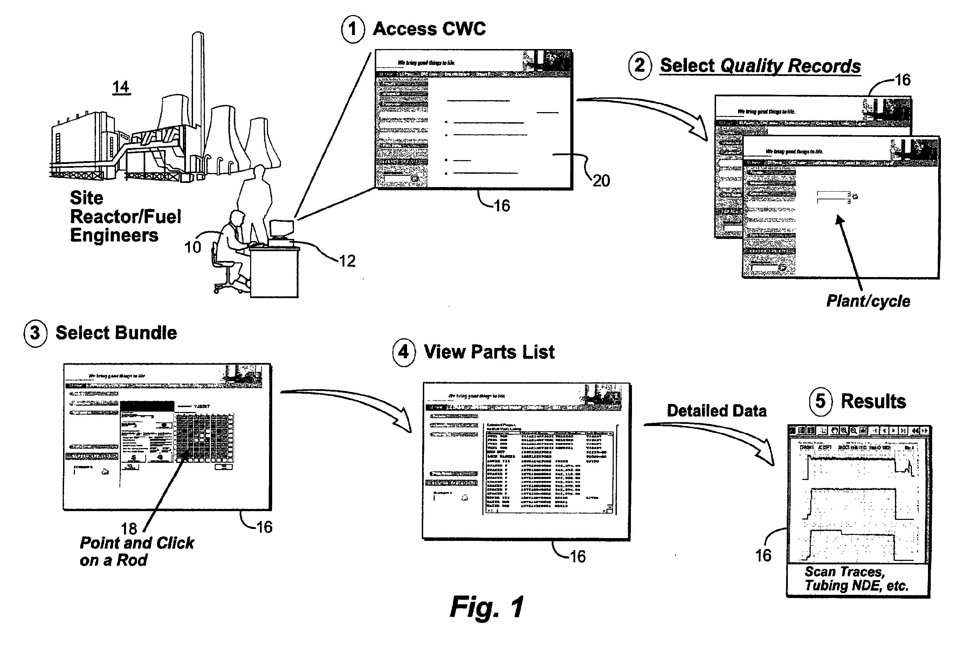

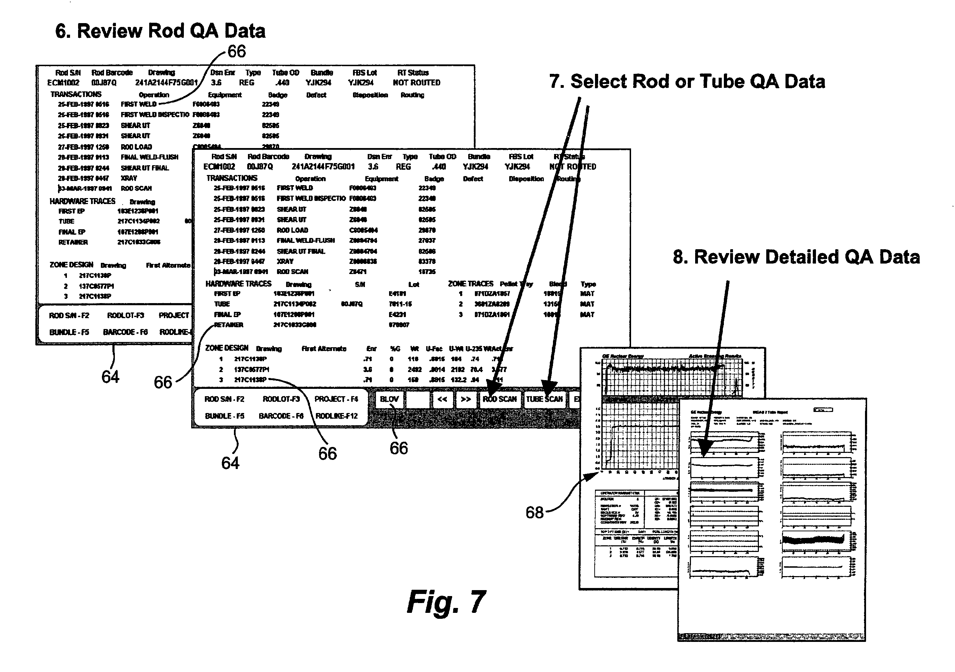

FIGURE 1 provides a graphical depiction of an interaction between an auditor 10 remotely accessing a website 16, in step 1, via a remote terminal 12. The website may be a interlinked group of interactive electronic pages arranged in HTML (hypertext markup language) and/or XML (extensible markup language) format that are linked to various databases, and accessible via the Internet. Alternatively, the web site may be a software program application operating on a host computer that includes a graphical user interface (GUI) that is remotely accessible, such as via the Internet, direct modem connection or other remote connection. The terminal communicates with a remote computer (see Fig. 7) hosting the website. In step 2, the auditor selects and reviews records during the course of an audit process. In particular, a nuclear power generation plant 14 requires substantial information related to the fuel rods and fuel rod bundles that are used by the power generation facility to power its nuclear reactors. The information maintained by the facility regarding the fuel rods and fuel rod bundles includes both information maintained by the power generation facility 14 regarding the installation of fuel rod bundles, the arrangement of fuel rod bundles in a reactor, operating conditions, operating history of fuel rod bundles in the reactor and information regarding reworking of the bundles during which fuel bundles are replaced or rearranged in the reactor. This information is stored in databases maintained in a computer system at the power plant 14.

Other information needed by the auditor 10 regarding fuel rods and fuel rod bundles includes information maintained by a manufacturer of the rods and bundles. The manufacturer provides assembled fuel rod bundles to the power generation facility. This information from the manufacturer may include engineering design specifications as to the fuel rod bundles and the fuel rods in the bundles that are to be delivered to the power generation facility, delivery verification data regarding delivered fuel rod bundles, information regarding the assembly of fuel rods into fuel rod bundles, and other information that is obtained from the manufacturer. The manufacturer has a computer system with one or more databases that stores information on the fuel rods and bundles shipped to the plant 14. The information from both the facility and fuel rod manufacturer is distributed on various databases some of which may be may be maintained by the power generation facility and other generation databases that are maintained by the manufacturer.

In step 3, the auditor is presented with a website page that shows a graphical image 18 of the particular component of the nuclear plant that he selected to audit, in step 2. For example, an image 18 of a selected bundle of nuclear fuel rods is presented. This image shows the actual arrangement of fuel rods in the bundle and other components of the bundle represented by the image. The graphical image 18 is interactive and allows the auditor to select, e.g., point and click" to a particular fuel rod shown in the imaged bundle.

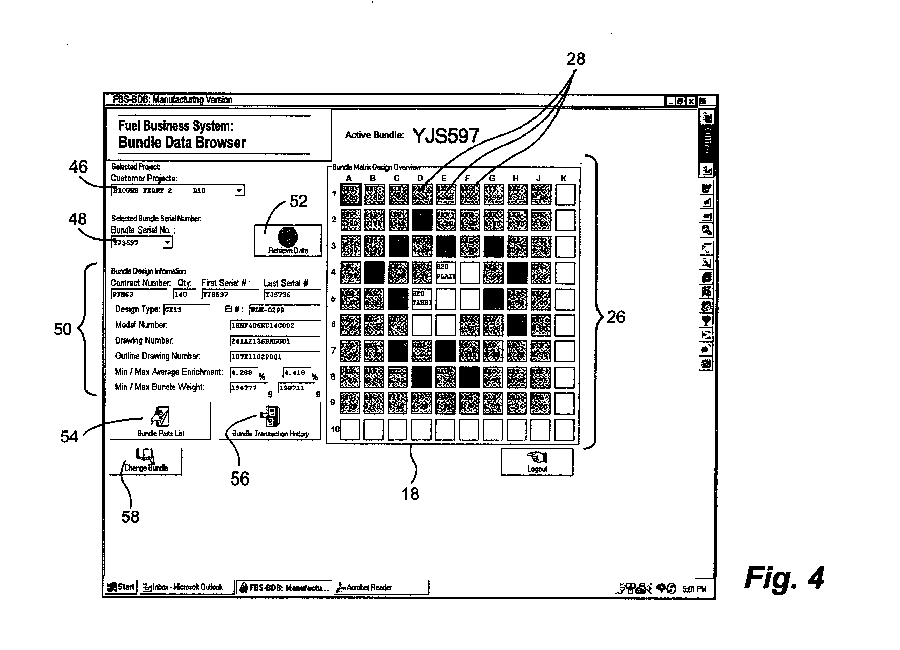

The graphical image 18 may be an electronic representation of the entire system being audited, or just a component, feature or function of the system being audited. The image 18 may be generated by host computer using an image template, which is filled in with graphical representation of data representative of the system, component, feature or function being represented. The template may be an outline image of a fuel rod bundle (such as shown in Fig. 4), a partially completed image of an array of fuel rod bundles in à nuclear reactor, a time line outline of reactor operational history or any other image of a feature, process, or system to be audited.

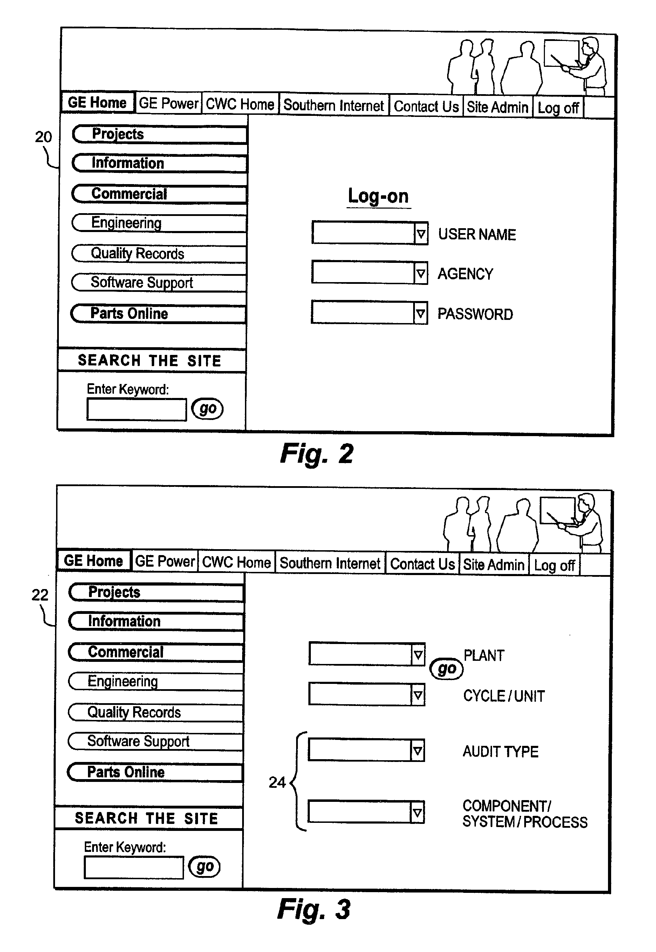

To obtain access to the information on fuel rods and bundles from both the plant and manufacturer, the auditor 10 first remotely accesses an Internet website 16 which may be maintained by the manufacturer and/or the power generation facility. In accessing the website, the auditor initially logs on, step 1, to the website so as to have remote access to the information needed to perform the audit. As shown in FIGURE 2, a log-on screen 20 is initially presented to the auditor which prompts the auditor to enter identification and password information sufficient to uniquely identify the auditor and to provide secure access to the website. The data entered by the auditor is processed by the host computer to authenticate the auditor and determine the data to which the auditor is authorized to access and review. The log-in page of the website enables the auditor to have access to only the information sufficient to perform his auditing function. In particular, the website uses the auditors identification information and/or password to identify the level of authorization to information held by the auditor and provide the auditor with access to information via the website which is within the authorization level of the auditor.

In addition, the log-on screen for the website identifies the auditor as being an "auditor" and, thus, having access rights to the website. This identification as an auditor will cause the website to display web pages 22 (see Fig. 3) that lists various plants/cycles/units 22 that can be selected to be audited. In addition, the web page displays a selectable list of various auditing functions 24 that the auditor may choose to perform. For example, auditors commonly perform several auditing functions in relation to a nuclear power facility. In particular, auditors may perform an engineering review of fuel rods and fuel bundles to determine that these fuel rods and bundles which are being assembled for the plant have been properly ordered and will be suitable for the facility. The engineering review is usually performed before fuel rods and bundles are delivered to the plant and are used to confirm that the rods and bundles have been properly ordered. A second audit is a component review of each of the bundles have been delivered to confirm that the bundles and their fuel rods conform to the engineering design specifications which were used to order the bundles. A third audit is the fuel manufacturing process used in making fuel rods, and may include process information regarding the process steps for manufacturing fuel rods, material data regarding the fuel chemicals used to form the fuel rods.

Also, the website may provide certification information that identifies the individuals and the dates and times on which they performed each step in the fuel rod manufacturing process. Similarly, a fourth audit may be performed on the assembly of the fuel rods into a bundle and may include similar information such as welding information in welding the fuel rods into the bundle and the specific fuel rods assembled into the bundle, and the arrangement of fuel rods and other components to the bundles. A fifth audit procedure may be a review of records associated with each of the four prior auditing steps to confirm that all of the required documents for verifying the engineering review, component review, fuel and bundle manufacturing processes are available, properly recorded, authentic and have been certified as being accurate.

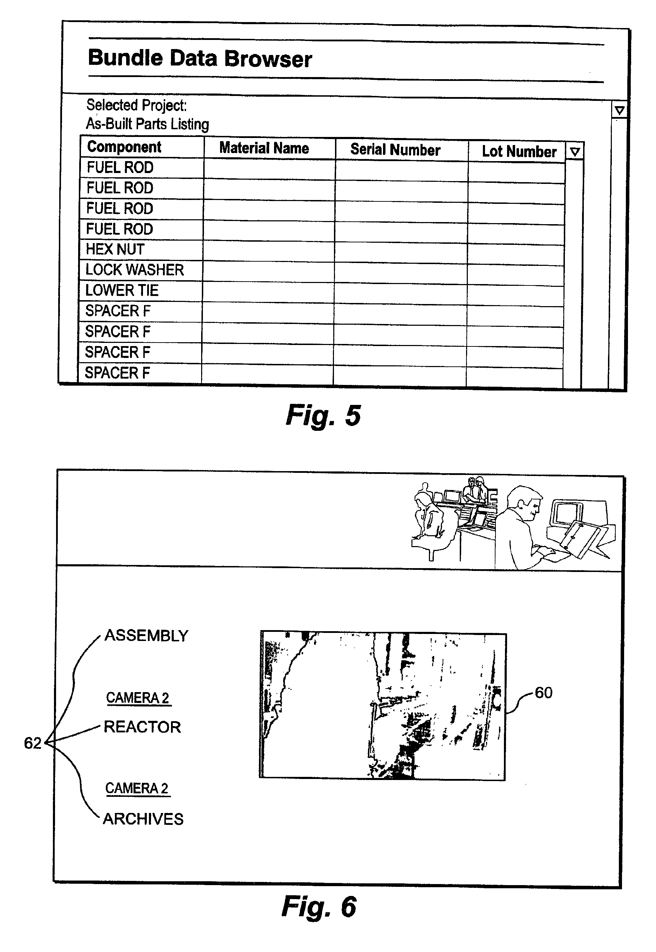

FIGURE 6 shows a web page showing a moving video image 60 of a fuel rod assembly process. The video image is selectable and may be a real time . image of the assembly process or an archived video image of the assembly of a particular fuel rod, such as a rod selected using the graphical fuel rod bundle 26. Other video camera images 62 may be selected for remote viewing of other processes and structures that may be selected by the auditors. The data available to the auditors may include both historical data, such as regarding engineering design, fuel rod manufacturing and assembly of fuel rod bundles, and real time information, such as video web cam images of an assembly facility that is manufacturing fuel rods and assembling them into fuel rod bundles. The information regarding fuel rods, for example, available via the website may include multi-media information, such as moving video images or still pictures that show the fuel rod manufacturing process for each fuel rod. The real time information may also include records as they are created and certified by assembly personnel and engineers who are preparing fuel rods and assembling them in bundles for delivery to the manufacturing facility. Accordingly, the auditor may monitor in real time the assembly of fuel rods into bundles.

To conduct any one of the five audits, the website page 22 presents the auditor with a selection of various audit functions to be selected and performed. For example, the auditor may select to conduct a record review by selecting an audit of "quality records" maintained by the power generation facility 14. In selecting quality records, the auditor also enters into the website information identifying the power generation plant and the particular system, e.g., power cycle, which the auditor desires to audit in reviewing quality records. Once the plant, cycle and quality records audit function have been selected and entered in the web pages 22" the website presents a graphical image of the plant/cycle selected for auditing.

FIGURE 4 shows an exemplary web page that includes a graphical image (18) of a fuel rod bundle that has been selected for being audited. The web page includes a graphical map of a fuel rod bundle that provides a map of the fuel rod bundle that identifies the various fuel rods, fuel trays and other components in the bundle (such as by color coding the various components). The graphical image is not a generic image of a fuel rod bundle, but is rather a graphical map of the specific fuel rod that has been selected for being audited. The graphical map is accurately representative of the specific fuel rod bundle that has been selected to be audited. Information about the fuel rod bundle may be presented on the web page adjacent to the graphical image 18 of the fuel rod bundle. For example, the fuel rod bundle may be identified by customer project number 46, bundle serial number 48, and bundle design information 50, which may include the bundle design type, contract serial numbers, bundle drawing number, bundle weight and range of bundle average enrichment levels. In addition to the identification information, the web page may include "buttons" that link to other information about the bundle that is stored in the databases. For example, a "retrieve data" button 52 may be used to link to additional data regarding the bundle (as identified by its serial number). Activating the retrieve data button causes another web page to be displayed having additional identifying information regarding the bundle. Moreover, a bundle parts list button 54 may be used to link to a database having parts information about the bundle and activating the button causes a web page (figure 5) listing the components (parts) of the bundle identified in figure 4. Similarly, a history button 56 may be activated to display a web page (not shown) of a history of the bundle, such as chronologically showing the assembly events for the bundle, delivery and operational events of the bundle. In addition, a bundle selection button 58 may be used to select another fuel rod bundle to be displayed in the web page shown in figure 4.

The map of the fuel rod bundle is based on data obtained on the specific fuel rod bundle. To generate this graphical image of an actual fuel rod bundle, the website obtains data stored within the computer system regarding the fuel rod bundle and uses that data to create the graphical image of the fuel rod bundle. Graphical maps of other components and sub-systems of the nuclear power plant may be included on other website pages. These maps also provide accurate and current information on the actual components and sub-systems represented by the map. Moreover, these maps provide a means for searching for and locating documentation related to the component or subsystem depicted by the map. Using the map, an auditor can remotely select and access documents by point-and-clicking on the features of the graphical fuel rod (or other feature shown in the map) for which documents are desired. Point-and-click refers to the user interface operation of manipulating a mouse (or keyboard or other user input device) to position a cursor over a selected feature of the graphical map. By clicking the mouse, e.g., depressing a button on the mouse, a listing of documents pertaining to the selected map feature is called up on the display screen.

The graphic image template may include variable data fields. These fields are filled in with a color, symbol or other indicia to complete the image. The filled in colors, symbols or indicia represent the actual configuration of some aspect of the system, component or process that is represented by the graphical image. The data fields are linked to a database with information regarding the system, component or process represented by the image. These linkages allow data about a selected system, component or process to be imported into the image template. With the imported data, the image of the template is customized to represent the particular system, component or process selected to be audited.

For example, a fuel rod bundle image, such as shown in Figure 4, may be formed using a template showing a grid outline 26 of a fuel rod bundle and variable data fields 28 at each of the locations in the grid corresponding to a potential location of a fuel rod, or other variable component of a fuel rod bundle. The data fields are linked to the database(s) having information about each fuel rod bundle, and, in particular, regarding the location in the bundle of specific fuel rods and other variable components of the bundle. To generate a graphical image of a particular field rod bundle, the auditor selects the appropriate plant and cycle, in step 2, and selects the specific fuel rod bundle from a listing of fuel rod bundles for the selected plant/cycle or from a graphical image of the reactor bundle array for the selected plant/cycle. Once the fuel rod bundle has been selected, the host computer generates a bundle image from the template bundle image and filling in symbols representative of a fuel rod or other bundle component. These symbols of fuel rods and other components are inserted in the appropriate data fields 28 of the template grid 26 of the fuel rod bundle, based on the information about the selected fuel rod bundle in the database(s). Each data field in the template is linked to a data field in the database(s) having information on fuel rods in bundles that corresponds to the location in the bundle represented by the data field. By accessing the database, the host computer determines whether and which fuel rod is loaded in each rod location (as marked by a corresponding data field) in the bundle grid of the template. The database has data on each fuel rod bundle that identifies each fuel rod in the bundle, the location of the rod in the bundle and the location in other databases of further information regarding each fuel rod. The information on each fuel rod is linked via a data field to a location on the graphical image of the bundle that corresponds to the actual location of that rod in the bundle.

In step 4, the website retrieves the information available on the selected fuel rod from the databases at the plant and manufacturer. A website page is generated that displays a list of the available information, e.g., documents, on the selected fuel rod. In step 5, the auditor selects one or more of the documents listed, in step 4. Those documents are displayed to the auditor, step 5, on the auditor's terminal.

It has been previously known to create graphical map images of systems, such as fuel rod bundles, and use the image as a means for accessing documentation regarding specific components within the fuel rod bundle. However, these prior systems have been limited to single terminal software applications and have not provided access to all of the data needed for performing audit reviews. In particular, these graphical image maps have provided access so that in-house engineers can access locally available computer records. The graphical fuel rod maps provide complete access to all of the data needed to perform an audit. The map has also not provided remote access to auditing records. The graphical image of a system, such as a fuel rod bundle, is used to provide an accurate map of the specific fuel rod bundle being audited and to provide an access, e.g., browser, to obtain additional information about the fuel rod bundle.

FIGURE 7 graphically shows a sequence of web pages that may be used by an auditor reviewing data on an individual fuel rod selected using the fuel rod browser image 26 (shown in Figure 4). When an auditor selects (from the bundle image 26) an individual rod to be reviewed, a web page 64 that presents quality (QA) information of the rod. The page presents in summary form the history of the rod ("transactions"), rod characteristics ("Hardware traces" and "zone traces"), information about the identification of the rod ("rod S/N"), and other rod information. The rod summary information is presented in data fields 66 of the web page that are linked to databases having more detailed information supporting and related to the summary rod information. The listing is of documents that relate to the feature, e.g., a fuel rod, on the graphical map that is selected by the auditor. The listing of parts list and certification data provides links to documentation held within one or more databases that stores the documentation listed in the web screen.

By selecting a particular data field, e.g., "rod scan" on the web page, in step 7. the auditor selects for review that particular documentation. For example, the selected documentation may be results of testing 68 (step 8) performed on a particular fuel rod. Accordingly, by accessing the website and selecting the type of audit to be performed, e.g., review of quality records, and the particular component of the power generation facility to be audited, e.g., a particular fuel rod assembly, the auditor can select that data which is necessary to conduct an audit of a particular feature of the power generation facility all by remote access via a website. The graphical map enables the auditor to select any feature of the fuel rod bundle shown on the map. The auditor is not guided to any particular feature, e.g., a particular fuel rod, of the map and, thus, is not influenced by the website (or the nuclear power plant operators) to select any specific feature. In addition, the graphical map does not suggest which feature on the map will be selected by the auditor. Thus, the website operator, e.g., the nuclear power plant operator, does not have any forewarning as to which features of the fuel rod assembly (or other subsystem or component represented by the map) that will be selected by the auditor for review. Accordingly, the graphical map of the fuel rod assembly (as well as of other components and sub-systems) provides a convenient and independent means for an auditor to access auditing records. Also, the map provides a "blind" that prevents the system operators from promoting certain features for auditing selection and from having forewarning as to which features will be reviewed by the auditors.

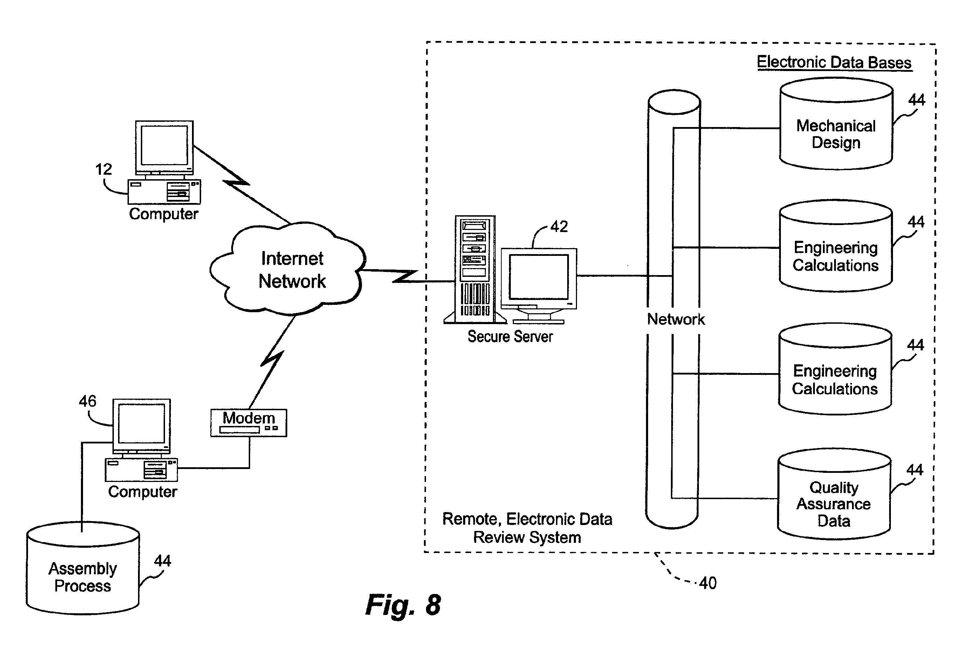

FIGURE 8 is an exemplary diagram of a computer network for implementing the web access system shown in FIGURES 1 through 7. In particular, a computer network system 40 for supporting the web access system may include a host computer secure server 42 on which the website software is maintained and provide a remote access via the Internet to computer systems operated by auditors. The website software application includes the web pages and graphical templates accessible by the auditor and provides data links from the web pages to the various databases having information which may be requested by the auditor.

These database 44 linkages may be through a secure network to various databases maintained at the power generation plant facility and/or a manufacturer which operates a computer system 46 linked via the Internet to the plant-computer system 40. The host website software also includes an information management program, such as a database search engine linked to the website pages, allows the website to link to and access data from the databases 44. The databases may be consolidated into a single database warehouse, such as an Oracle-based system which contains all of the data which may be accessed by the auditor. Some of the databases which may be accessible directly via the network to the server, or which may provide data to a data warehouse include databases of the mechanical design of various components within the system, such as fuel rods and fuel bundles; engineering calculations regarding performance and testing parameters for the system; and quality assurance data that show the processing and operational history of the system. In addition, the secure server may have links to real-time web cams and other real-time information which may be accessed by the auditor to in real time monitor the operation of the facility.

For the sake of good order, various aspects of the invention are set out in the following clauses:-
1. A system for providing limited access to information needed to conduct an audit of a complex system comprising:
   host computer system in communication with other computer systems, said host computer system (42) operating an interactive information management program having a graphical image of said complex system;
   first database (44) in communication with the host computer system, said first database having information related to the complex system and said first database linked to the information management program such that features of the complex system shown on the graphical image are each logically linked to information in the first database corresponding to the feature in the complex system;
   second database (44) on a first remote computer system (46) in communication with the host computer system, said second database having information related to the complex system and said second database linked to the information management program such that features of the complex system shown on the graphical image are each logically linked to information in the second database corresponding to the feature in the complex system;
   user access terminal (12) remote from the host computer and in communication with the host computer, wherein the user access terminal displays the graphical image (18) communicated from host computer system, and the user can point to a feature on the graphical image displayed on the terminal to cause the interactive information management program to retrieve information corresponding to the pointed to feature from the first and second databases and display the retrieved information at the user terminal.
2. A system as in clause 1 wherein the complex system is a nuclear power reactor and the graphical image is an array of nuclear fuel rods (18) in the reactor.
3. A system as in clause 2 wherein the graphical image (18) of the nuclear fuel rods is linked to the first database (44) having information regarding the operational history of each of said fuel rods in the reactor and is linked to the second database (44) having information regarding the assembly of each of said fuel rods.
4. A system as in clause 3 wherein the graphical image (18) of the array of nuclear fuel rods shows a grid arrangement (26) of fuel rods in a specific nuclear power reactor selected by the user.
5. A system as in clause 4 wherein the grid arrangement (26) of fuel rods shown in the graphical image changes as the user selects a different reactor.
6. A system as in clause 1 wherein the host computer (42) includes a security program limiting access to information in the first and second database depending on access rights of the user.
7. A system as in clause 1 wherein the information in the first database (46) includes a video image of a feature of the complex system selectable on the graphical image.
8. A system as in clause 7 wherein the video image is of a fuel rod assembly process.
9. A system as in clause 7 wherein the video image is of a fuel rod replacement process in a nuclear reactor.
10. A method for providing remote access to information needed to conduct an audit of a complex system (14), using a system including a host computer (42), a first database (44), and a remote user terminal (12), comprising the steps of:
   a. operating on the host computer system an interactive information management program having a graphical image (18) of the complex system, wherein the graphical image shows selectable features of the complex system;
   b. a user remotely accessing the interactive information management system via the remote user terminal, wherein said graphical image is displayed on the remote terminal (12);
   c. the said user interacts with the image displayed on the remote terminal by selecting at least one feature on the image corresponding to a feature of the complex system that the user has selected to audit;
   d. the selection of the at least one feature is conveyed from the remote terminal to interactive information management system in the host computer, which retrieves data from said first database related to the selected feature, and
   e. the data related to the selected feature is displayed on the remote terminal to the user.
11. A method as in clause 10 wherein the complex system is a nuclear power reactor (14) and the graphical image (18) is an array of nuclear fuel rods in the reactor.
12. A method as in clause 10 wherein the graphical image (18) of the nuclear fuel rods is linked to the first database (46) having information regarding the operational history of each of said fuel rods in the reactor, and is linked to the second database (44) having information regarding the assembly of each of said fuel rods, wherein said second database is remotely located at another computer system (46).
13. A method as in clause 12 wherein the graphical image (18) of the array of nuclear fuel rods shows an arrangement of fuel rods in a specific nuclear power reactor selected by the user.
14. A method as in clause 13 wherein the arrangement of fuel rods shown in the graphical image (18) changes as the user selects a different reactor.
15. A method as in clause 10 wherein the host computer (42) includes a security program limiting access to information in the first and second database depending on access rights of the user.
16. A method as in clause 10 wherein the information in the first database (44) includes a video image of a feature of the complex system selectable on the graphical image.
17. A method as in clause 16 wherein the video image is of a fuel rod assembly process.
18. A method as in clause 16 wherein the video image is of a fuel rod replacement process in a nuclear reactor.

## Claims

1. A system for providing limited access to information needed to conduct an audit of a complex system comprising:
host computer system in communication with other computer systems, said host computer system (42) operating an interactive information management program having a graphical image of said complex system;
first database (44) in communication with the host computer system, said first database having information related to the complex system and said first database linked to the information management program such that features of the complex system shown on the graphical image are each logically linked to information in the first database corresponding to the feature in the complex system;
second database (44) on a first remote computer system (46) in communication with the host computer system, said second database having information related to the complex system and said second database linked to the information management program such that features of the complex system shown on the graphical image are each logically linked to information in the second database corresponding to the feature in the complex system;
user access terminal (12) remote from the host computer and in communication with the host computer, wherein the user access terminal displays the graphical image (18) communicated from host computer system, and the user can point to a feature on the graphical image displayed on the terminal to cause the interactive information management program to retrieve information corresponding to the pointed to feature from the first and second databases and display the retrieved information at the user terminal.

2. A system as in claim 1 wherein the complex system is a nuclear power reactor and the graphical image is an array of nuclear fuel rods (18) in the reactor.

3. A system as in claim 2 wherein the graphical image (18) of the nuclear fuel rods is linked to the first database (44) having information regarding the operational history of each of said fuel rods in the reactor and is linked to the second database (44) having information regarding the assembly of each of said fuel rods.

4. A system as in claim 3 wherein the graphical image (18) of the array of nuclear fuel rods shows a grid arrangement (26) of fuel rods in a specific nuclear power reactor selected by the user.

5. A system as in claim 4 wherein the grid arrangement (26) of fuel rods shown in the graphical image changes as the user selects a different reactor.

6. A method for providing remote access to information needed to conduct an audit of a complex system (14), using a system including a host computer (42), a first database (44), and a remote user terminal (12), comprising the steps of:
a. operating on the host computer system an interactive information management program having a graphical image (18) of the complex system, wherein the graphical image shows selectable features of the complex system;
b. a user remotely accessing the interactive information management system via the remote user terminal, wherein said graphical image is displayed on the remote terminal (12);
c. the said user interacts with the image displayed on the remote terminal by selecting at least one feature on the image corresponding to a feature of the complex system that the user has selected to audit;
d. the selection of the at least one feature is conveyed from the remote terminal to interactive information management system in the host computer, which retrieves data from said first database related to the selected feature, and
e. the data related to the selected feature is displayed on the remote terminal to the user.

7. A method as in claim 6 wherein the complex system is a nuclear power reactor (14) and the graphical image (18) is an array of nuclear fuel rods in the reactor.

8. A method as in claim 6 wherein the graphical image (18) of the nuclear fuel rods is linked to the first database (46) having information regarding the operational history of each of said fuel rods in the reactor, and is linked to the second database (44) having information regarding the assembly of each of said fuel rods, wherein said second database is remotely located at another computer system (46).

9. A method as in claim 8 wherein the graphical image (18) of the array of nuclear fuel rods shows an arrangement of fuel rods in a specific nuclear power reactor selected by the user.

10. A method as in claim 9 wherein the arrangement of fuel rods shown in the graphical image (18) changes as the user selects a different reactor.
